# FASCICULE DE BREVET EUROPEEN

(11) **EP 0 736 045 B1**
(45) Date de publication et mention de la délivrance du brevet: **17.03.1999**
(21) Numéro de dépôt: 95904578.2
(22) Date de dépôt: 21.12.1994
(51) Int. Cl.: C08B 37/16

(54) **UTILISATION DE MONO-3,6-ANHYDROCYCLODEXTRINES POUR SOLUBILISER UN COMPOSE HYDROPHOBE ET POUR CONTROLER LA PURETE D'UN ENANTIOMERE, ET PROCEDE DE PREPARATION DE CES CYCLODEXTRINES**
VERWENDUNG VON MONO-3,6-ANHYDROCYCLODEXTRINEN ZUM AUFLöSEN EINER HYDROPHOBISCHEN VERBINDUNG UND PRüFEN DER REINHEIT EINES ENANTIOMERS UND VERFAHREN ZU IHRER HERSTELLUNG
USE OF MONO-3,6-ANHYDRO-CYCLODEXTRINS FOR SOLUBILISING A HYDROPHOBIC COMPOUND AND MONITORING THE PURITY OF AN ENANTIOMER, AND METHOD FOR PREPARING SAID CYCLODEXTRINS

(30) Priorité: 22.12.1993 FR 9315470
(43) Date de publication de la demande: 09.10.1996
(73) Titulaire: COMMISSARIAT A L'ENERGIE ATOMIQUE, 75015 Paris (FR)
(72) Inventeur: DJEDA NI-PILARD, Florence, F-91150 Etampes (FR); PERLY, Bruno, F-78320 Le-Mesnil-Saint-Denis (FR)
(74) Mandataire: Des Termes, Monique
(86) Numéro de dépôt international: FR9401502
(87) Numéro de publication internationale: WO9517433

(56) Documents cités:
- US-A- 4 983 586
- ANGEWANDTE CHEMIE. INTERNATIONAL EDITION, vol.30, no.1, 1991, WEINHEIM DE pages 80 - 81 PETER R. ASHTON ET AL. 'Synthesis and Characterization of Per-3,6-anhydro Cyclodextrins'
- JOURNAL OF ORGANIC CHEMISTRY, vol.56, 1991, EASTON US pages 7274 - 7280 PETER R. ASHTON ET AL. 'Per-3,6-anhydro-alpha and beta-cyclodextrin'
- ANGEW. CHEM. INT. ED. ENGL., vol.30, no.1, 1991, WEINHEIM pages 78 - 80 A. GADELLE ET AL.
- CHEMISTRY LETTERS, 1988, TOKYO JP pages 543 - 546 K. FUJITA ET AL. 'Preparation of 3,6-Anhydro- -cyclodextrin' cité dans la demande

## Description

### DESCRIPTION

La présente invention a pour objet l'utilisation de dérivés de cyclodextrines pour solubiliser dans un milieu aqueux des composés chimiques hydrophobes, en particulier des molécules pharmaceutiquement actives, par inclusion de ces molécules dans le dérivé de cyclodextrines.

Les cyclodextrines ou cyclomalto-oligosaccharides sont des composés d'origine naturelle formés par l'enchaînement de 6, 7 ou 8 unités glucose liées en α-1,4. De nombreux travaux ont montré que ces cyclodextrines pouvaient former des complexes d'inclusion avec des molécules hydrophobes et permettre ainsi la solubilisation de ces molécules dans des milieux aqueux. De nombreuses applications ont été proposées pour tirer profit de ce phénomène, en particulier dans le domaine pharmaceutique, comme il est décrit par D. Duchêne dans l'ouvrage intitulé "Cyclodextrins and their industrial uses", chapitre 6, pages 213 à 257, Editions de Santé, 1987. Des compositions pharmaceutiques utilisant ces cyclodextrines ont d'ailleurs été commercialisées au Japon, en Italie et plus récemment en France, par exemple par Pierre Fabre Médicament pour le Brexin® qui est un complexe d'inclusion du Piroxicam dans la β-cyclodextrine.

Parmi les cyclodextrines utilisables, la β-cyclodextrine qui comporte 7 unités glucose, est la plus adaptée au niveau de la taille de sa cavité et la moins chère des trois, mais son utilisation pose certains problèmes, car elle est moins soluble que les autres cyclodextrines et présente un caractère hémolytique.

Aussi, on a envisagé d'améliorer les propriétés de la β-cyclodextrine en la modifiant chimiquement pour la rendre plus adaptée. Plusieurs solutions ont été envisagées et ont conduit à l'utilisation de dérivés méthylés ou de dérivés hydroxyalkylés.

Les dérivés méthylés sont beaucoup plus solubles que la cyclodextrine d'origine et ils possèdent de bonnes propriétés de solubilisation de composés organiques hydrophobes, en particulier dans le cas de la 2,6-diméthyl-β-cyclodextrine. Néanmoins, ces dérivés méthylés, outre qu'ils sont difficiles à obtenir à l'état pur, sont inutilisables pour des applications pharmaceutiques, en particulier pour les formes injectables, en raison de leur très fort caractère hémolytique.

Les dérivés hydroxyalkylés, développés en particulier par Janssen, par exemple les hydroxypropyl-cyclodextrines présentent une très forte solubilité dans l'eau et sont peu hémolytiques. Toutefois, leur utilisation reste difficile en raison de leur extrême hétérogénéité chimique ; de plus, les substitutions peuvent limiter la formation de complexes d'inclusion par effet de gêne stérique, si bien qu'aucune application pharmaceutique n'a encore été mise au point avec ces dérivés.

La présente invention a précisément pour objet l'utilisation d'autres dérivés de cyclodextrines pour la solubilisation de composés chimiques hydrophobes qui permet de pallier ces inconvénients. Elle concerne également un nouveau procédé de préparation de ces dérivés de cyclodextrines qui conduit à des produits très purs sans exiger des étapes de purification laborieuses à mettre en oeuvre.

Selon l'invention, le procédé de solubilisation d'un composé chimique hydrophobe dans un milieu aqueux consiste à combiner le composé chimique hydrophobe avec une mono-3,6-anhydro-cyclodextrine de formule : 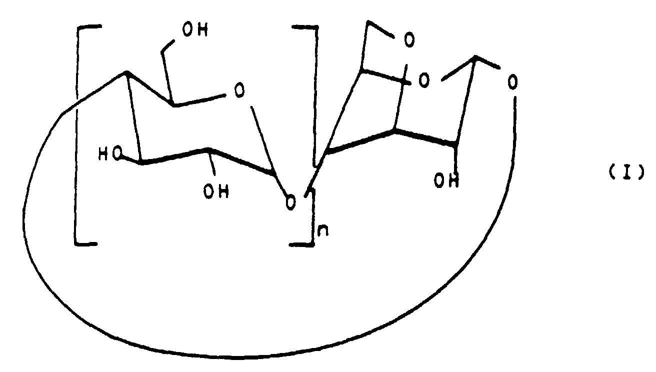 dans laquelle n est égal à 5, 6 ou 7,
pour former avec celle-ci un complexe d'inclusion soluble dans l'eau.

L'utilisation dans ce procédé du dérivé monoanhydro de cyclodextrine répondant à la formule précitée présente l'avantage d'améliorer la solubilité, la stabilité et la biodisponibilité, sous diverses formes d'administration, du composé hydrophobe, en particulier lorsqu'il s'agit de molécules pharmaceutiquement actives.

En particulier, la solubilité dans l'eau de ces dérivés est considérable et très supérieure à celle de la cyclodextrine parente, en particulier en ce qui concerne la β-cyclodextrine. Par ailleurs, ces dérivés de cyclodextrines présentent un caractère hémolytique plus faible que celui de la cyclodextrine parente. De plus, ces dérivés de cyclodextrines ont la propriété de présenter des affinités différentes pour les isomères d'un mélange d'isomères et de pouvoir être utilisés de ce fait dans des procédés de séparation d'isomères par chromatographie . Ils permettent aussi de réaliser facilement un contrôle de la pureté d'énantiomère, car les complexes d'inclusion formés avec des composés chiraux racémiques présentent en spectrométrie par résonance magnétique nucléaire une séparation, facile à observer, des signaux caractéristiques de chaque énantiomère.

Selon l'invention, on utilise de préférence le dérivé monoanhydro de la β-cyclodextrine, c'est-à-dire le dérivé de formule (I) avec n = 6. On peut toutefois aussi utiliser les dérivés de l'α-cyclodextrine (n = 5) ou de la γ-cyclodextrine (n = 7).

Les composés chimiques hydrophobes susceptibles d'être solubilisés dans des milieux aqueux au moyen de ces cyclodextrines peuvent être de différents types.

A titre d'exemples de tels composés, on peut citer des produits cosmétiques, des vitamines, des molécules pharmaceutiquement actives telles que celles décrites par D. Duchêne dans l'ouvrage intitulé "Cyclodextrins and their industrial uses", chapitre 6, pages 213 à 257, Editions de Santé, 1987).

De préférence dans l'invention, le composé chimique hydrophobe est une molécule pharmaceutiquement active.

A titre d'exemples de telles molécules, on peut citer les stéroïdes, par exemple la prednisolone, les agents anti-épileptiques comme la carbamazépine, et les agents anti-cancéreux.

Les dérivés de cyclodextrines de formule (I) utilisés dans l'invention peuvent être préparés par le procédé décrit dans Chemistry Letters, 1988, pages 543-546, par réaction du dérivé monotosylé correspondant avec une solution aqueuse de soude. Après cette réaction, on peut isoler le dérivé monoanhydro à l'état pur en mettant en oeuvre des purifications poussées par chromatographie liquide à haute performance pour éliminer les sous-produits et les sels.

Aussi, selon la présente invention, on utilise de préférence pour la préparation de ces dérivés, un procédé plus simple qui permet d'éviter ces étapes de purification.

Ce procédé plus simple de préparation d'une mono-3,6-anhydro-cyclodextrine de formule : 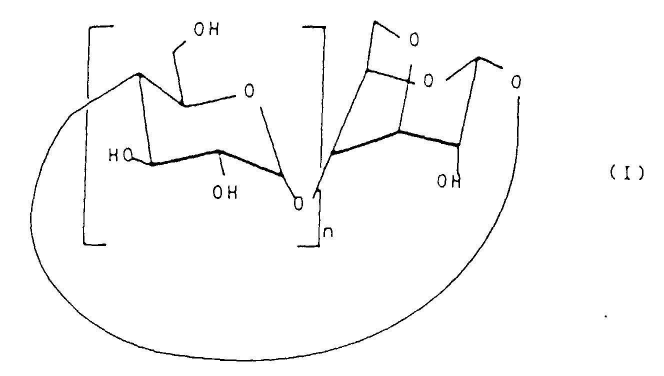 dans laquelle n est égal à 5, 6 ou 7, consiste à faire réagir un dérivé monotosylé de cyclodextrine de formule : 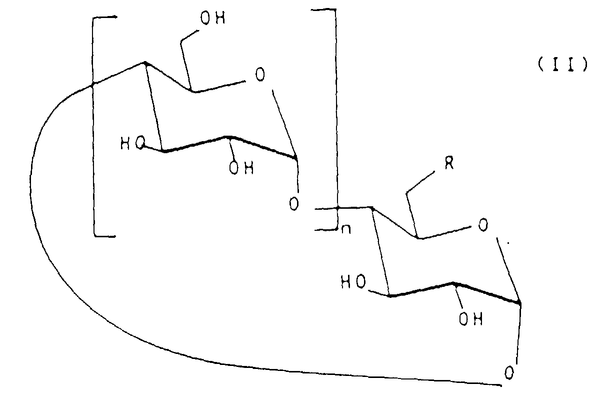 dans laquelle R est le groupe tosyle et n est égal à 5, 6 ou 7,
avec de la lithine en milieu aqueux.

L'utilisation de la lithine au lieu de la soude permet d'obtenir beaucoup plus facilement le dérivé monoanhydro de la cyclodextrine et de réaliser ensuite sa séparation du milieu réactionnel dans de meilleures conditions.

Cette séparation peut être effectuée par précipitation après acidification du milieu réactionnel et en renouvelant ces étapes de précipitation, on peut isoler le dérivé de cyclodextrine à l'état pur sans qu'il soit nécessaire d'effectuer des étapes complémentaires de purification par chromatographie.

La précipitation peut être effectuée en ajoutant le milieu aqueux après acidification dans un solvant organique tel que l'acétone et en séparant ensuite le précipité formé par centrifugation. On parvient ainsi à éliminer totalement les dérivés de l'acide sulfoniqùe solubles dans le solvant organique ainsi que les sels, car le chlorure de lithium est soluble dans un solvant organique tel que l'acétone.

L'invention concerne également les complexes d'inclusion d'une mono-3,6-anhydrocyclodextine répondant à la fomule (I) précitée avec un composé chimique hydrophobe, en particulier une molécule pharmaceutiquement active.

Ce complexe d'inclusion peut être préparé par des procédés classiques, par exemple en ajoutant à une solution ou à une suspension de la mono-3,6-anhydrocyclodextrine utilisée, une solution du composé hydrophobe dans un solvant organique approprié, par exemple l'acétone. On peut ensuite isoler le complexe d'inclusion ainsi formé par liophylisation.

Ces complexes d'inclusion, lorsqu'ils sont formés avec des molécules pharmaceutiquement actives peuvent être utilisés en particulier dans des compositions pharmaceutiques qui comprennent de plus un véhicule pharmaceutiquement acceptable.

Ces compositions pharmaceutiques qui peuvent être administrées par voie orale ou parentérale, sont par exemple des solutions, des poudres, des suspensions, etc., en particulier des solutions injectables.

Comme on l'a indiqué plus haut, les complexes d'inclusion formés avec les mono-3,6-anhydrocyclodextrines de formule (I) de l'invention et des composés chiraux, racémiques ont la propriété intéressante d'avoir en résonance magnétique nucléaire des signaux séparés pour chaque énantiomère.

Aussi, l'invention a encore pour objet un procédé pour contrôler la pureté d'un énantiomère d'un composé organique, qui consiste à combiner cet énantiomère avec une mono-3,6-anhydrocyclodextrine répondant à la formule (I) précitée pour former un complexe d'inclusion de cet énantiomère, et à soumettre le complexe obtenu à une spectrométrie par résonance magnétique nucléaire pour détecter la présence éventuelle de l'autre énantiomère sur le spectre obtenu.

L'invention a encore pour objet un procédé de séparation d'isomères par chromatographie, qui consiste à mettre en circulation un mélange de ces isomères dans une colonne remplie d'un support solide chromatographique sur lequel est fixé de façon covalente une mono-3,6-anhydro-cyclodextrine de formule (I) conforme à l'invention, et à recueillir séparément les isomères à la sortie de la colonne .

Le support chromatographique utilisé peut être formé d'un polymère insoluble ou de micro particules de silice. Les polymères insolubles peuvent être en particulier l'agarose et les polysaccharides du types Sephadex®.

Le greffage chimique des cyclodextrines de l'invention sur ces supports chromatographiques peut être effectué au moyen d'un réactif de couplage tel que l'épichlorhydrine qui assure le couplage entre un groupe OH de la cyclodextrine et un groupe OH du support chromatographique.

La propriété des cyclodextrines de l'invention d'avoir une affinité différente pour chacun des isomères permet d'obtenir une bonne séparation de ceux-ci par chromatographie. Les isomères peuvent être des isomères optiques, des isomères de position ou de diastéréoisomères.

D'autres caractéristiques et avantages de l'invention apparaîtront mieux à la lecture des exemples suivants, donnés bien entendu à titre illustratif et non limitatif, en référence aux figures annexées.

La figure 1 annexée représente le spectre de résonance magnétique nucléaire d'un complexe d'inclusion du mono-3,6-anhydro-cyclomaltoheptaose avec un mélange racémique de dothiépine.

La figure 2 représente une partie agrandie du spectre de la figure 1.

### Exemple 1 : Préparation de la mono-3,6-anhydro-cyclomaltoheptaose.

Pour réaliser la synthèse conformément au procédé de l'invention, on prépare tout d'abord le mono-6-tosyl-6-désoxy-cyclomaltoheptaose par action du chlorure de p-toluènesulfonyle sur la β-cyclo-dextrine en milieu aqueux.

60 g de cyclomaltoheptaose (52,8 mmol) sont suspendus dans 500 ml d'eau distillée. On ajoute goutte à goutte 6,57 g (164 mmol) de soude caustique dissoute dans 20 ml d'eau sur 5 minutes avec forte agitation magnétique. A la solution limpide obtenue sont ajoutés 10,08 g (52,9 mmol) de chlorure de p-toluène sulfonyle (chlorure de tosyle) dans 30 ml d'acétonitrile goutte à goutte sur 10 minutes. Après 2 h d'agitation à température ambiante, le précipité formé est éliminé par filtration et le filtrat est conservé 48 h à 4°C. Le précipité est isolé par filtration sous vide, lavé par 50 ml d'eau glacée et recristallisé immédiatement dans l'eau bouillante. Après une nuit à 4°C, le précipité est filtré et séché sous vide à 30°C. On obtient ainsi 7,5 g (12 %) d'un composé pur conforme aux spécifications.

On dissout alors 100 mg du 6-tosyl-6-désoxy-cyclomaltoheptaose obtenu précédemment dans 10 ml de LiOH 1M dans l'eau. La dissolution est immédiate. On maintient la solution pendant 15 heures à 40°C, puis on l'acidifie à un pH d'environ 3 par HCl 1M. On ajoute alors la solution goutte à goutte et sous agitation à 20 ml d'acétone pure. Il se forme un précipité vitreux que l'on isole par centrifugation (6000 rpm, 10 min.) et on redissout le précipité dans 0,5 ml d'eau. On répète cette précipitation et on isole à nouveau le résidu par centrifugation et on le redissout dans l'eau, puis on lyophilise.

On confirme la structure du produit obtenu par résonance magnétique nucléaire du proton à haut champ et l'on obtient ainsi des caractéristiques spectrales conformes à celles données dans Chemistry Letters, 1988, p. 543-546.

La solubilité dans l'eau du composé obtenu est de 520 g/l à 25°C, soit près de 30 fois celle de la cyclodextrine d'origine qui est de 18 g/l. Cette solubilité est également au moins deux fois celle des α et γ-cyclodextrines.

Les propriétés hémolytiques de ce dérivé ont été testées en mettant en contact 0,4 ml d'une suspension d'érythrocytes humains avec 4 ml d'une solution de ce dérivé à 5 mmol/l, à un pH de 7,4 pendant 30 min à 37°C. Dans ces conditions, le dérivé montre 0 % d'hémolyse, alors que le pourcentage d'hémolyse est de 50 % pour la β-cyclo-dextrine dans les mêmes conditions.

D'autres essais ont mis en évidence l'absence de propriétés hémolytiques à des concentrations beaucoup plus élevées (pas d'hémolyse détectable à 50 mmol/l).

### Exemple 2 : Préparation d'un complexe d'inclusion du mono-3,6-anhydro-cyclomaltoheptaose et de prednisolone.

La prednisolone répond à la formule suivante : 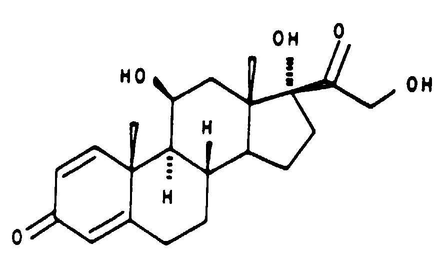 et elle a une très faible solubilité dans l'eau (0,25 mg/ml à 25°C, soit 0,7 mmol/l).

On dissout 10 µmol du mono-3,6-anhydro-cyclomaltoheptaose préparé dans l'exemple 1, dans 1 ml d'eau pure (eau apyrogène pour injections) et on ajoute 5 µmol de prednisolone sous forme d'une solution concentrée à 50 mmol/l dans l'acétone. On élimine l'acétone sous barbotage d'azote et on lyophilise la solution.

Le solide résiduel qui contient 10 µmol du dérivé de cyclodextrine et 5 µmol de prednisolone est redissous dans le minimum d'eau à 25°C. Ce minimum correspond à 50 µl d'eau, ce qui indique une solubilité maximale de 100 mmol/l en prednisolone dans de l'eau en présence de ce dérivé de cyclodextrine à une concentration de 200 mmol/l.

Dans les mêmes conditions, la β-cyclodextrine ne permet de solubiliser la prednisolone qu'à hauteur de 9 mmol/l.

On obtient donc un résultat bien supérieur avec le dérivé monoanhydro de cette cyclodextrine.

### Exemple 3 : Préparation d'un complexe d'inclusion du mono-3,6-anhydro-cyclomaltoheptaose avec la dothiépine sous la forme du mélange racémique.

La dothiépine répond à la formule :

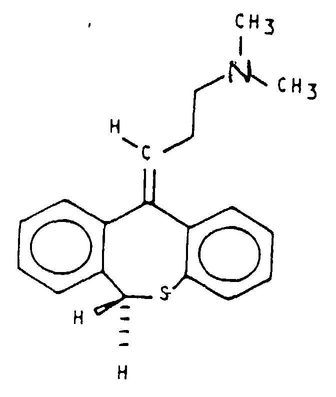

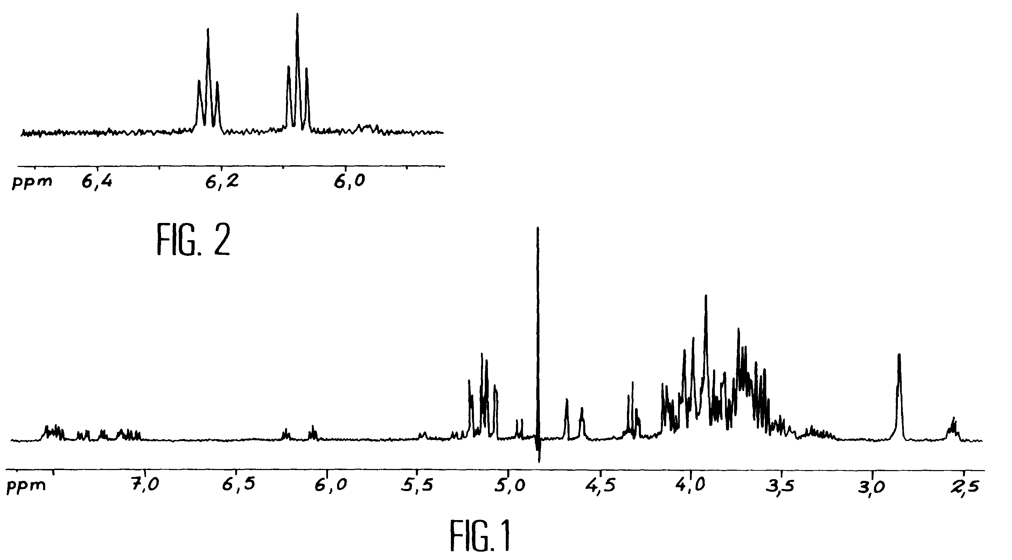

Cette molécule est optiquement active par absence de symétrie par rapport au plan aromatique et le composé commercial est un racémique. On prépare le complexe d'inclusion de ce composé racémique en formant une solution aqueuse de chlorhydrate de dothiépine et du mono-3,6-anhydro-cyclomaltoheptaose contenant 5 mmol/l de chlorhydrate et 10 mmol/l du dérivé de cyclodextrine. On examine ensuite la solution par spectrométrie par résonance magnétique nucléaire à 500 MHz et à 298 K. Le spectre obtenu dans ces conditions est représenté sur les figures 1 et 2 annexées.

Sur la figure 1, on a représenté le spectre complet et sur la figure 2, on a représenté a plus grande échelle, la partie du spectre de la figure 1 qui correspond aux signaux des deux énantiomères.

Sur cette figure, on peut voir que l'on a une bonne séparation des signaux des protons vinyliques qui atteint 0,2 ppm, alors que cette séparation n'est que de 0,03 ppm lorsqu'on utilise la β-cyclodextrine dans les mêmes conditions.

Ainsi, les dérivés de cyclodextrines de l'invention peuvent être utilisés comme réactif chiral pour vérifier le degré de pureté d'un énantiomère.

## Revendications

1. Procédé de solubilisation d'un composé chimique hydrophobe dans un milieu aqueux, caractérisé en ce qu'il consiste à combiner le composé chimique hydrophobe avec une mono-3,6-anhydro-cyclodextrine de formule : 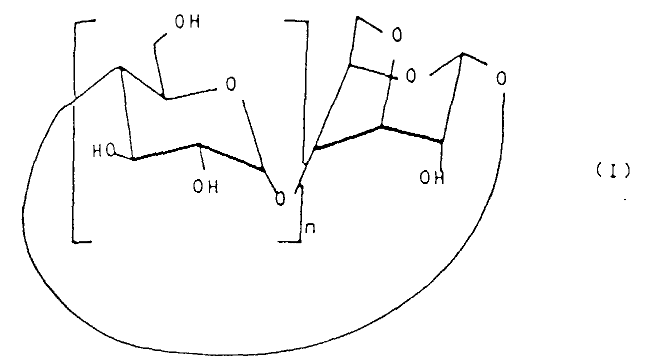 dans laquelle n est égal à 5, 6 ou 7,
pour former avec celle-ci un complexe d'inclusion soluble dans l'eau.

2. Complexe d'inclusiion d'une mono-3,6-anhydro-cyclodextrine de formule : 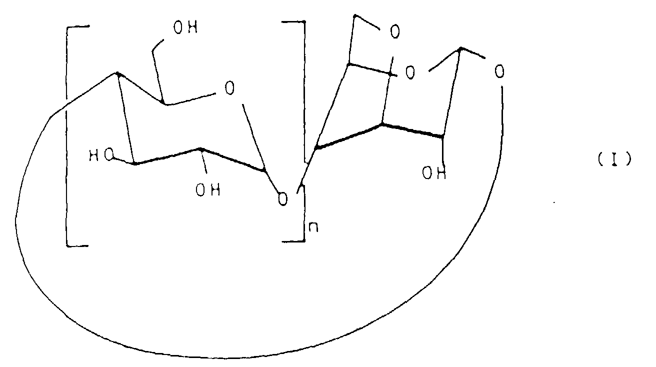 dans laquelle n est égal à 5, 6 ou 7 avec un composé chimique hydrophobe.

3. Complexe selon la revendication 2, caractérisé en ce que n est égal à 6.

4. Complexe selon l'une quelconque des revendications 2 et 3, caractérisé en ce que le composé chimique hydrophobe est une molécule pharmaceutiquement active.

5. Complexe selon la revendication 4, caractérisé en ce que la molécule pharmaceutiquement active est la prednisolone.

6. Composition pharmaceutique, caractérisée en ce qu'elle comprend un complexe d'inclusion d'une cyclodextrine selon l'une quelconque des revendications 2 à 5, avec un véhicule pharmaceutiquement acceptable.

7. Procédé pour contrôler la pureté d'un énantiomère d'un composé organique, caractérisé en ce qu'il consiste à combiner cet énantiomère avec une mono-3,6-anhydro-cyclodextrine de formule : 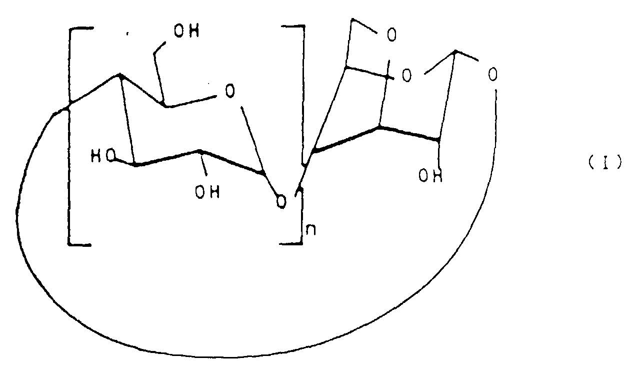 dans laquelle n est égal à 5, 6 ou 7,
pour former un complexe d'inclusion de cet énantiomère, et
à soumettre le complexe obtenu à une spectrométrie par résonance magnétique nucléaire pour détecter la présence éventuelle de l'autre énantiomère sur le spectre obtenu.

8. Procédé selon la revendication 7, caractérisé en ce que n est égal à 6.

9. Procédé selon l'une quelconque des revendications 7 et 8, caractérisé en ce que le composé organique est la dothiépine.

10. Procédé de séparation d'isomères par chromatographie, caractérisé en ce qu'il consiste à mettre en circulation un mélange de ces isomères dans une colonne remplie d'un support solide chromatographique sur lequel est fixé de façon covalente une mono-3,6-anhydro-cyclodextrine de formule (I) : 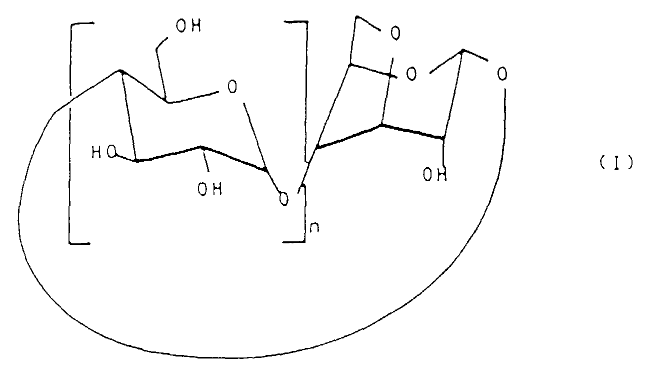 dans laquelle n est égal à 5, 6 ou 7, et à recueillir séparément les isomères à la sortie de la colonne.

## Patentansprüche

1. Verfahren zum Löslichmachen einer hydrophoben chemischen Verbindung in einem wäßrigen Medium, dadurch gekennzeichnet, daß es darin besteht, die hydrophobe chemische Verbindung mit einem Mono-3,6-anhydro-cyclodextrin der Formel: 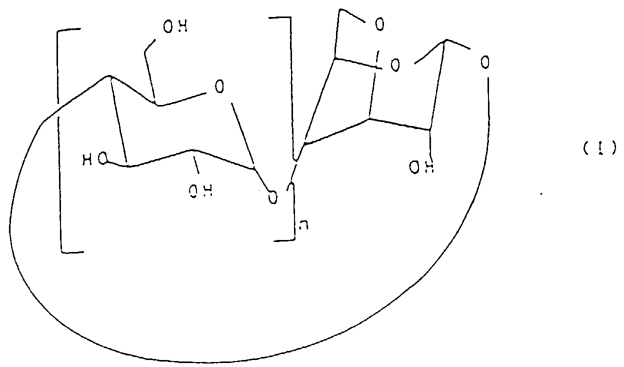 worin n gleich 5, 6 oder 7 ist, zu kombinieren, um mit diesem einen in Wasser löslichen Einschlußkomplex zu bilden.

2. Einschlußkomplex eines Mono-3,6-anhydro-cyclodextrins der Formel: 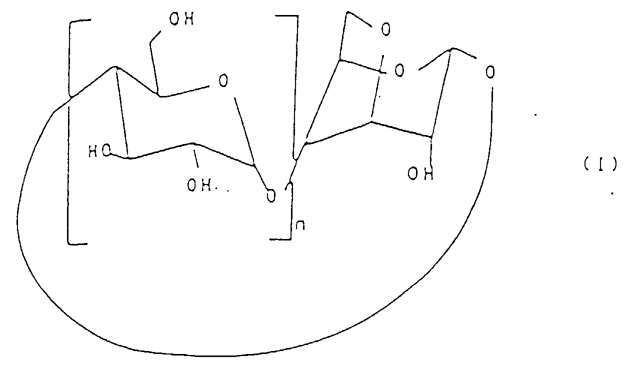 worin n gleich 5, 6 oder 7 ist, mit einer hydrophoben chemischen Verbindung.

3. Komplex nach Anspruch 2, dadurch gekennzeichnet, daß n gleich 6 ist.

4. Komplex nach einem der Ansprüche 2 und 3, dadurch gekennzeichnet, daß die hydrophobe chemische Verbindung ein pharmazeutisch aktives Molekül ist.

5. Komplex nach Anspruch 4, dadurch gekennzeichnet, daß das pharmazeutisch aktive Molekül Prednisolon ist.

6. Pharmazeutische Zusammensetzung, dadurch gekennzeichnet, daß sie zusammen mit einem pharmazeutisch annehmbaren Träger einen Einschlußkomplex eines Cyclodextrins nach einem der Ansprüche 2 bis 5 umfaßt.

7. Verfahren zur Kontrolle der Reinheit eines Enantiomers einer organischen Verbindung, dadurch gekennzeichnet, daß es darin besteht, dieses Enantiomer mit einem Mono-3,6-anhydro-cyclodextrin der Formel: 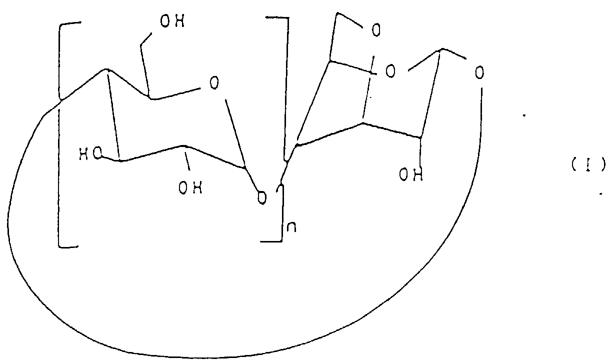 worin n gleich 5, 6 oder 7 ist, zu kombinieren, um einen Einschlußkomplex dieses Enantiomers zu bilden, und den erhaltenen Komplex einer spektrometrischen Messung durch magnetische Kernresonanz zu unterziehen, um in dem erhaltenen Spektrum die eventuelle Anwesenheit des anderen Enantiomers festzustellen.

8. Verfahren nach Anspruch 7, dadurch gekennzeichnet, daß n gleich 6 ist.

9. Verfahren nach einem der Ansprüche 7 und 8, dadurch gekennzeichnet, daß die organische Verbindung Dothiepin ist.

10. Verfahren zur Trennung von Isomeren durch Chromatographie, dadurch gekennzeichnet, daß es darin besteht, eine Mischung dieser Isomere in einer Kolonne umlaufen zu lassen, die mit einem festen chromatographischen Träger gefüllt ist, auf welchem ein Mono-3,6-anhydro-cyclodextrin der Formel (I): 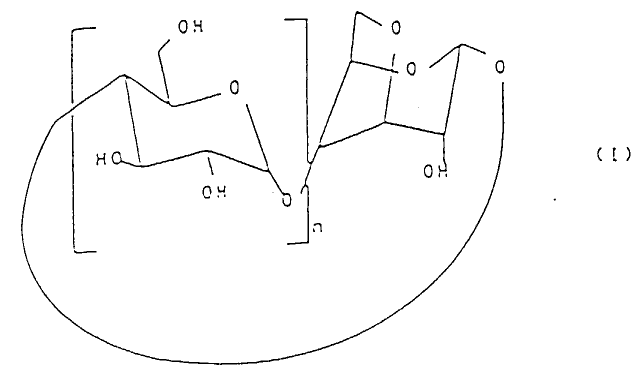 worin n gleich 5, 6 oder 7 ist, in kovalenter Weise fixiert ist, und die Isomeren getrennt am Ausgang der Kolonne aufzufangen.

## Claims

1. Process for solubilizing a hydrophobic chemical compound in an aqueous medium, characterized in that it consists of combining the hydrophobic chemical compound with mono-3,6-anhydrocyclodextrin of formula: 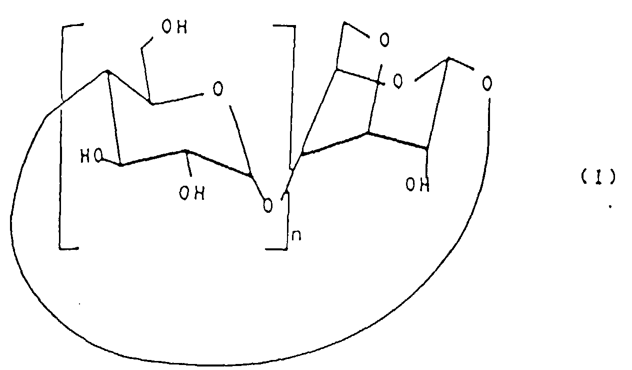 in which n is equal to 5, 6 or 7, in order to form therewith a water-soluble inclusion complex.

2. Inclusion complex of a mono-3,6-anhydrocyclodextrin of formula: 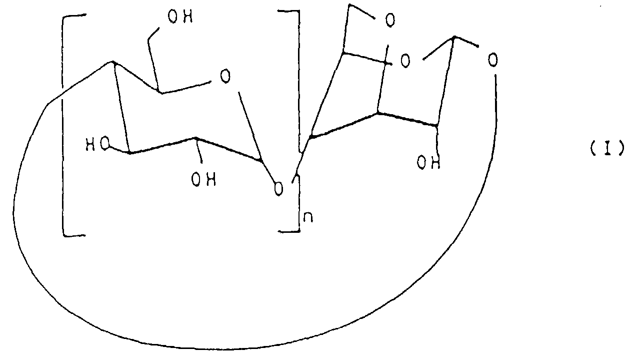 in which n is equal to 5, 6 or 7, with a hydrophobic chemical compound.

3. Complex according to claim 2, characterized in that n is equal to 6.

4. Complex according to either of the claims 2 and 3, characterized in that the hydrophobic chemical compound is a pharmaceutically active molecule.

5. Complex according to claim 4, characterized in that the pharmaceutically active molecule is prednisolone.

6. Pharmaceutical composition, characterized in that it comprises an inclusion complex of a cyclodextrin according to any one of the claims 2 to 5, with a pharmaceutically acceptable vehicle.

7. Process for controlling the purity of an enantiomer of an organic compound, characterized in that it consists of combining said enantiomer with a mono-3,6-anhydrocyclodextrin of formula: 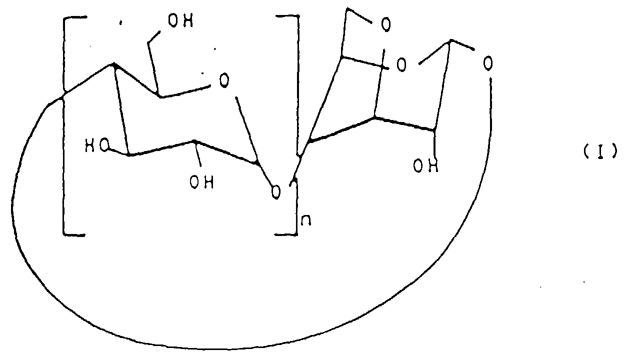 in which n is equal to 5, 6 or 7, in order to form an inclusion complex of said enantiomer and subjecting the complex obtained to nuclear magnetic resonance spectrometry for detecting the possible presence of the other enantiomer on the spectrum obtained.

8. Process according to claim 7, characterized in that n is equal to 6.

9. Process according to either of the claims 7 and 8, characterized in that the organic compound is dothiepin.

10. Process for the separation of isomers by chromatography, characterized in that it consists of circulating a mixture of these isomers in a column filled with a solid chromatographic support to which is covalently fixed a mono-3,6-anhydrocyclodextrin of formula (I): 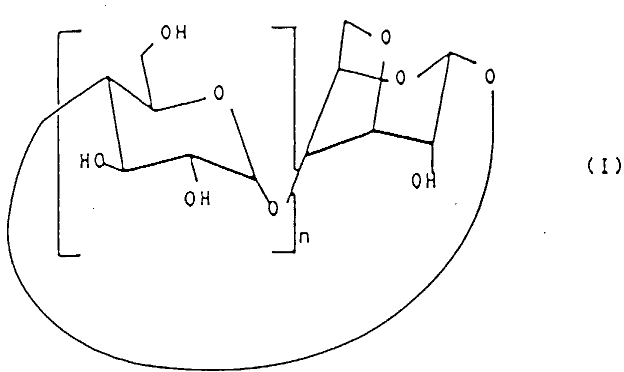 in which n is equal to 5,6 or 7 and separately collecting the isomers at the column exit.
